(19) Europäisches Patentamt
European Patent Office
Office européen des brevets

(11) EP 3 415 961 A1

(12) **EUROPEAN PATENT APPLICATION**
published in accordance with Art. 153(4) EPC

(43) Date of publication:
**19.12.2018 Bulletin 2018/51**

(21) Application number: **17766621.1**

(22) Date of filing: **13.03.2017**

(51) Int Cl.:
***G02B 1/111*** *(2015.01)* ***B32B 7/02*** *(2006.01)*
***B32B 27/20*** *(2006.01)* ***C03C 17/32*** *(2006.01)*
***C03C 17/34*** *(2006.01)* ***G02B 1/14*** *(2015.01)*

(86) International application number:
**PCT/JP2017/009998**

(87) International publication number:
**WO 2017/159621 (21.09.2017 Gazette 2017/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.03.2016 JP 2016055849**

(71) Applicant: **FUJIFILM Corporation**
**Tokyo 106-8620 (JP)**

(72) Inventors:
- **MATSUNO, Ryou**
**Fujinomiya-shi**
**Shizuoka 418-8666 (JP)**
- **KIYOTO, Naoharu**
**Fujinomiya-shi**
**Shizuoka 418-8666 (JP)**
- **HOSODA, Hidemasa**
**Fujinomiya-shi**
**Shizuoka 418-8666 (JP)**
- **NAKAGAWA, Yuki**
**Fujinomiya-shi**
**Shizuoka 418-8666 (JP)**

(74) Representative: **Hoffmann Eitle**
**Patent- und Rechtsanwälte PartmbB**
**Arabellastraße 30**
**81925 München (DE)**

# (54) ANTIREFLECTIVE FILM AND FUNCTIONAL GLASS

(57) Provided are an antireflection film having high durability and a functional glass including the antireflection film.

An antireflection film includes a transparent substrate (10); and an antireflection layer (30) provided on one surface side of the transparent substrate (10), in which the antireflection layer (30) is formed by laminating, from the transparent substrate (10) side, a silver nanoparticle layer (36) formed by dispersing a plurality of silver nanoparticles (35) of which an aspect ratio is greater than or equal to 3 in a binder (33), and a layer of low refractive index (38) having a refractive index lower than a refractive index of the transparent substrate (10), in this order, and the silver nanoparticle layer (36) contains a metal more noble than silver.

FIG. 1

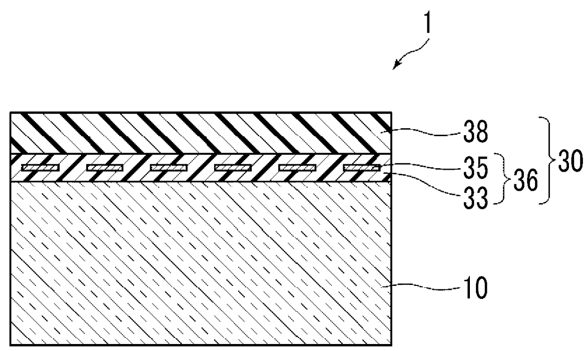


EP 3 415 961 A1

## Description

## BACKGROUND OF THE INVENTION

1. Field of the Invention

The present invention relates to an antireflection film having an antireflection function with respect to an incidence ray and a functional glass to which the antireflection film is applied.

2. Description of the Related Art

In the related art, in order to prevent decrease in visibility due to reflection of an external light source or scenery, an antireflection film for visible light including an antireflection film on a transparent substrate has been applied on the glass surface of a display. A dielectric multilayer or a configuration including a visible light wavelength absorption layer formed of a silver nanoparticle layer in a multilayer is known as such an antireflection film for visible light.

In JP2015-129909A, an antireflection film including, on a transparent substrate, a laminate of a silver nanoparticle layer that contains metal flat plate particles, in particular, silver nano-disks, and a dielectric layer has been proposed. According to this antireflection film, it is possible to realize a very low reflectivity in a broadband.

Meanwhile, JP5636208B discloses a technique for improving light-fast of silver nano-disks for heat ray shielding (heat shielding) by substitution by gold.

## SUMMARY OF THE INVENTION

The antireflection film including the laminate of the silver nanoparticle layer that contains silver nano-disks and a dielectric layer described in JP2015-129909A is a technique that achieves significantly low reflectivity with a small number of lamination.

On the other hand, when the inventors of the present invention attempted to utilize the antireflection film disclosed in JP2015-129909A as an outdoor show window, antireflection performance deteriorated over time. The inventors of the present invention conducted intensive investigations, and it has become clear that the deterioration in the antireflection performance results from the deformation of the silver nano-disks due to the influence of ozone gas.

The present invention has been made in view of the above circumstances, and an object of the present invention is to provide an antireflection film having high antireflection properties and high durability which allows the film to withstand long term usage outdoors. Another object of the present invention is to provide a functional glass including the antireflection film having high durability.

An antireflection film of the present invention comprises a transparent substrate; and an antireflection layer provided on one surface side of the transparent substrate, in which the antireflection layer is formed by laminating, from the transparent substrate side, a silver nanoparticle layer formed by dispersing a plurality of silver nanoparticles of which an aspect ratio is greater than or equal to 3 in a binder, and a layer of low refractive index having a refractive index lower than a refractive index of the transparent substrate, in this order, and the silver nanoparticle layer contains a metal more noble than silver.

The phrase "metal more noble than silver" means a metal having a standard electrode potential higher than a standard electrode potential of silver. The standard electrode potential of the metal described in "Chemical Handbook, Revised 5th Edition, Fundamentals II, pp. 581-584" can be referred to. Even though the same metal is used, the standard electrode potential varies depending on types of metal compounds and types of coexisting compounds, and thus can be appropriately selected and used in accordance with the types of metals.

In a case where the silver nanoparticle has a flat plate shape, a major axis length of the silver nanoparticle is an equivalent circle diameter of a main plane, and the aspect ratio is a ratio of the equivalent circle diameter to a plate thickness. In a case where the silver nanoparticle has a rod shape, the major axis length of the silver nanoparticle is a rod length, and the aspect ratio is a ratio of the rod length to the equivalent circle diameter.

The silver nanoparticle particularly preferably has the flat plate shape.

In a case where the silver nanoparticle does not correspond to either a flat plate shape or a rod shape, a portion having a maximum length of the particle is defined as a major axis, and as an average value of minor axes, an average value of lengths which are at any cross section parallel to the major axis and having the major axis and are at each position of the major axis in a minor axis direction orthogonal to the major axis, is obtained, and therefore the aspect ratio is defined as a ratio of the length of the major axis (maximum length) to the average value in the minor axis direction.

In the antireflection film of the present invention, it is preferable that an amount of the noble metal contained in the silver nanoparticle layer is $10^{-2}$ atom% to 5 atom% with respect to the silver nanoparticle.

In the antireflection film of the present invention, it is preferable that the metal more noble than silver is disposed

on a surface of the silver nanoparticle.

In the antireflection film of the present invention, it is preferable that the metal more noble than silver is at least one of gold, palladium, iridium, platinum, or osmium.

In the antireflection film of the present invention, it is preferable that the silver nanoparticle layer contains an organic component in which a solubility product $pK_{sp}$ with respect to a silver ion is 14 or greater, or a reduction potential is less than 700 mV.

In addition, it is more preferable that the silver nanoparticle layer contains an organic component in which a solubility product $pK_{sp}$ with respect to a silver ion is 14 or greater, and a reduction potential is less than 700 mV.

It is preferable that the antireflection film of the present invention further comprises a hard coat layer between the transparent substrate and the silver nanoparticle layer.

The hard coat layer is a layer having hardness of greater than or equal to B, preferably greater than or equal to HB in a pencil hardness test (formerly known as JIS K5400 pencil scratch test).

It is preferable that the hard coat layer is formed of a cured product of an aqueous resin composition.

It is more preferable that the antireflection film of the present invention further comprises a layer of high refractive index having a refractive index higher than that of the hard coat layer, between the hard coat layer and the transparent substrate.

In the antireflection film of the present invention, it is preferable that a total amount of an unreacted polymerization initiator contained in a layer other than the transparent substrate is 50 $mg/m^2$ or less.

A functional glass of the present invention comprises: a glass plate; and the antireflection film of the present invention described above adhered to at least one surface of the glass plate.

The antireflection film of the present invention has favorable antireflection properties over a wide wavelength range by including the silver nanoparticle layer formed by dispersing the silver nanoparticles of which the aspect ratio is greater than or equal to 3 in the antireflection layer. In addition, by containing the metal more noble than silver in the silver nanoparticle layer, deformation of the nanoparticles due to the influence of ozone gas can be suppressed, and therefore durability allowing the film to withstand long term usage outdoors becomes high.

## BRIEF DESCRIPTION OF THE DRAWINGS

Fig. 1 is a schematic cross-sectional view illustrating a configuration of an antireflection film of a first embodiment of the present invention.
Fig. 2 is a schematic perspective view illustrating an example of a silver nano-disk.
Fig. 3 is a schematic perspective view illustrating another example of the silver nano-disk.
Fig. 4 is a schematic perspective view illustrating an example of a silver nanorod.
Fig. 5 is a schematic cross-sectional view illustrating a configuration of an antireflection film of a second embodiment of the present invention.
Fig. 6 is a schematic cross-sectional view illustrating a configuration of an antireflection film of a third embodiment of the present invention.
Fig. 7 is a schematic view illustrating an embodiment of a functional glass of the present invention.

## DESCRIPTION OF THE PREFERRED EMBODIMENTS

Hereinafter, embodiments of the present invention will be described.

Fig. 1 is a schematic cross-sectional view illustrating a schematic configuration of an antireflection film 1 according to an embodiment of the present invention. As shown in Fig. 1, the antireflection film 1 of this embodiment includes a transparent substrate 10, and an antireflection layer 30 provided on one surface side of the transparent substrate 10. In addition, the antireflection layer 30 is formed by laminating, from the transparent substrate 10 side, a silver nanoparticle layer 36 formed by dispersing a plurality of silver nanoparticles 35 of which an aspect ratio is greater than or equal to 3, and a layer of low refractive index 38 having a refractive index lower than a refractive index of the transparent substrate 10 in this order. Furthermore, the silver nanoparticle layer 36 contains a metal more noble than silver.

The antireflection film 1 of the present invention contains the metal more noble than silver in the silver nanoparticle layer 36, and therefore resistance with respect to ozone gas increases, and a deterioration in reflection properties in long term usage outdoors is unlikely to occur. That is, the antireflection film 1 of the present invention has high durability which allows the film to withstand long term usage outdoors.

In the antireflection film of the present invention, as light having a wavelength at which reflection is planned to be prevented, visible light (380 nm to 780 nm) is the main target. It is preferable that the antireflection function is reflectivity of lower than or equal to 1% with respect to light having a wavelength of 550 nm, and it is more preferable that the

antireflection function is reflectivity of lower than or equal to 1% with respect to light having a wavelength of 550 nm, and the wavelength range in which the reflectivity is lower than or equal to 1% covers the range of greater than or equal to 100 nm.

By including the silver nanoparticle layer in the antireflection layer, reflectivity of lower than or equal to 1% can be realized over a significantly wide wavelength range.

In the antireflection film of the present invention, it is preferable that a total amount of an unreacted polymerization initiator contained in a layer other than the transparent substrate is 50 mg/$m^2$ or less, from the viewpoint of further improving ozone gas resistance.

<Silver Nanoparticle Layer>

The silver nanoparticle layer 36 is a layer containing the plurality of silver nanoparticles 35 of which an aspect ratio is greater than or equal to 3 in a binder 33. From the viewpoint of suppressing haze, a major axis length is preferably smaller than a wavelength $\lambda$ of light that prevents reflection, and the aspect ratio is preferably less than 40. The phrase "silver nanoparticles being dispersed" indicates that greater than or equal to 80% of the silver nanoparticles are arranged separately from each other. The phrase "being arranged separately from each other" indicates a state in which there is an interval between the closest fine particles of greater than or equal to 1 nm. It is more preferable that the interval between the closest fine particles of the fine particles arranged separately from each other is greater than or equal to 10 nm.

Furthermore, the silver nanoparticle layer 36 contains a metal more noble than silver. The phrase "metal more noble than silver" means a "metal having a standard electrode potential higher than a standard electrode potential of silver" as described above.

It is preferable that the metal more noble than silver is contained by $10^{-2}$ atom% to 5 atom% with respect to the silver. According to such a range, it is possible to remarkably obtain an effect of the present invention.

A content of the metal more noble than silver can be measured by, for example, dissolving a sample with an acid or the like and then measuring with a high frequency inductively coupled plasma (ICP).

A position at which the metal more noble than silver is contained in the silver nanoparticle layer is in the vicinity of a surface of the silver nanoparticle.

The vicinity of the surface of the silver nanoparticle includes the surface of the silver nanoparticle and regions of 2 to 4 atomic layers from the surface, and also includes a case in which the metal more noble than silver covers the surface of the silver nanoparticle.

The presence of the metal more noble than silver in the vicinity of the surface of silver nanoparticle can be detected by, for example, Auger Electron Spectroscopy (AES), X-ray Photoelectron Spectroscopy (XPS), or the like.

Examples of the metal more noble than silver include gold, palladium, iridium, platinum, osmium, or the like. One these materials may be independently used, or two or more of these materials may be used in combination. Among these, palladium, gold, and platinum are particularly preferable from the viewpoint of easy availability of raw materials.

The metal more noble than silver can be contained in the vicinity of the surface of silver nanoparticle by photoreduction, addition of a reducing agent, or chemical reduction after formation of the silver nanoparticles, and it is preferable that the metal more noble than silver is reduced by silver so as to be generated.

In a case where the reduction is performed at the same time of adding the reducing agent, the metal more noble than silver is directly reduced, and thus effects of the reduction are reduced, and therefore a method of substituting with silver is preferable.

In addition, the reduction can also be achieved by, for example, heating the silver nanoparticles in a solvent containing the metal more noble than silver. By heating the solvent, the metal other than silver is reduced by silver. Depending on the purpose, the photoreduction, the addition of the reducing agent, the chemical reduction method, or the like may be combined as appropriate.

-Silver Nanoparticle-

The silver nanoparticles 35 preferably have a flat plate shape having two facing main planes as shown in Figs. 2 and 3, or have a rod shape as shown in Fig. 4. In a case of silver nanoparticles 35A and 35B having a disk-like shape (hereinafter, will be referred to as silver nano-disk) as shown in Figs. 2 and 3, the major axis length is an equivalent circle diameter D of a main plane thereof, and the aspect ratio is a ratio D/T of the equivalent circle diameter D to a distance between the facing main planes, that is, a thickness (plate thickness) T of plate-shaped metal particles. In a case of the silver nanorods 35C (hereinafter, will be referred to as silver nanorod) as shown in Fig. 4, the major axis length is a rod length L thereof, and the aspect ratio is a ratio $L/\varphi$ of the rod length L to an equivalent circle diameter $\varphi$ of a cross section perpendicular to a rod length direction.

[Silver Nano-Disk]

The silver nano-disk is a particle having two facing main planes as shown in Fig. 2 or Fig. 3. Examples of the shape of the main plane of the silver nano-disk include a hexagonal shape, a triangular shape, a circular shape, and the like. Among these, from the viewpoint of high visible light transmittance, it is preferable that the shape of the main plane is a hexagonal shape as shown in Fig. 2, a polygonal shape having a hexagonal shape or more, or a circular shape as shown in Fig. 3.

Two or more types of silver nano-disks having a plurality of shapes may be used by being mixed.

In the present specification, the circular shape indicates a shape in which the number of sides having a length of greater than or equal to 50% of an average equivalent circle diameter of the silver nano-disk described below is 0 per one silver nano-disk particle. The silver nano-disk having a circular shape is not particularly limited insofar as the silver nano-disk has a round shape without any angle in a case of observing the silver nano-disk from an upper portion of the main plane by using a transmission electron microscope (TEM).

In the present specification, the hexagonal shape indicates a shape in which the number of sides having a length of greater than or equal to 20% of an average equivalent circle diameter of the silver nano-disk described below is 6 per one silver nano-disk. The silver nano-disk having the hexagonal shape is not particularly limited insofar as the silver nano-disk has the hexagonal shape in a case of observing the silver nano-disk from an upper portion of the main plane by using the TEM, and the silver nano-disk can be appropriately selected depending on the purpose. For example, the angle of the hexagonal shape may be an acute angle or may be a blunt angle, but it is preferable that the angle becomes a blunt angle from the viewpoint of reducing absorption in a visible light range. The degree of the blunt angle is not particularly limited, and is able to be suitably selected according to the purpose.

(Average Equivalent Circle Diameter and Coefficient of Variation of Silver Nano-Disk)

The equivalent circle diameter D which is the major axis length of the silver nano-disk indicates a diameter of a circle having an area identical to a projection area of each particle. The projection area of each particle is able to be obtained by a known method in which an area on an electron micrograph is measured and is corrected at an imaging magnification. In addition, an average equivalent circle diameter $D_{AV}$ is an arithmetic average value obtained from calculation of a particle diameter distribution by obtaining a particle diameter distribution (particle size distribution) by the statistics of the equivalent circle diameter D of 200 silver nano-disks. A coefficient of variation of the particle size distribution of the silver nano-disks is a value (%) which is obtained by dividing the standard deviation of the particle size distribution by the average equivalent circle diameter described above.

In the antireflection film of the present invention, the coefficient of variation of the particle size distribution of the silver nano-disks is preferably less than or equal to 35%, is more preferably less than or equal to 30%, and is particularly preferably less than or equal to 20%. It is preferable that the coefficient of variation is less than or equal to 35% from the viewpoint of reducing absorption of a visible light ray in the antireflection structure.

The size of the silver nano-disk is not particularly limited, and is able to be suitably selected according to the purpose, and the average particle diameter is preferably 10 to 500 nm, is more preferably 20 to 300 nm, and is even more preferably 50 to 200 nm.

(Thickness and Aspect Ratio of Silver Nano-Disk)

In the antireflection film of the present invention, a thickness T of the silver nano-disk is preferably less than or equal to 20 nm, is more preferably 2 to 15 nm, and is particularly preferably 4 to 12 nm.

The particle thickness T is able to be measured by an atomic force microscope (AFM) or a transmission electron microscope (TEM).

Examples of a measurement method of the average particle thickness using AFM include a method in which a particle dispersion liquid containing a silver nano-disk is added dropwise onto a glass substrate and is dried, and a thickness per one particle is measured, and the like.

Examples of a measurement method of the average particle thickness using TEM include a method in which a particle dispersion liquid containing a silver nano-disk is added dropwise onto a silicon substrate and is dried, and then, a coating treatment is performed by carbon vapor deposition and metal vapor deposition, a cross-sectional segment is prepared by focused ion beam (FIB) processing, and the cross-sectional surface is observed by TEM, and thus, the thickness of the particle is measured, and the like (hereinafter, will be referred to as FIB-TEM).

In a case where the silver nanoparticles are the silver nano-disks, a ratio D/T (the aspect ratio) of the diameter D of the silver nano-disks (equivalent circle diameter) to the thickness T is not particularly limited insofar as the ratio D/T is preferably greater than or equal to 3. The ratio D/T can be suitably selected according to the purpose, and is preferably 3 to 40, and is more preferably 5 to 40, from the viewpoint of reducing absorption of a visible light ray and a haze. In a

case where the aspect ratio is greater than or equal to 3, it is possible to suppress the absorption of the visible light ray, and in a case where the aspect ratio is less than 40, it is also possible to suppress a haze in a visible range.

(Synthesis Method of Silver Nano-Disk)

A method of synthesizing the silver nano-disks is not particularly limited, and is able to be suitably selected according to the purpose. Examples of the method of synthesizing the silver nano-disks having a hexagonal shape to a circular shape include a liquid phase method such as a chemical reduction method, a photochemical reduction method, and an electrochemical reduction method, and the like. Among them, a liquid phase method such as the chemical reduction method and the photochemical reduction method is particularly preferable from the viewpoint of controlling the shape and the size. Silver nano-disks having a hexagonal shape to a triangular shape may be synthesized, and then, for example, an etching treatment of dissolution species such as a nitric acid and sodium sulfite which dissolve silver, an aging treatment due to heating, and the like may be performed, and thus, the angle of the silver nano-disks having a hexagonal shape to a triangular shape may become a blunt angle, and silver nano-disks having a hexagonal shape to a circular shape may be obtained.

In addition, in the synthesis method of the silver nano-disk, seed crystals may be fixed onto the surface of a transparent substrate such as a film and glass in advance, and then, silver may be subjected to crystalline growth.

[Silver Nanorod]

The silver nanorod is a particle having a shape extending in a uniaxial direction as shown in Fig. 4.

(Rod Length of Silver Nanorod)

The rod length L, which is the major axis length of the silver nanorods, is the length of the rod in the uniaxial direction described above, and the rod length L of each individual particle can be obtained by imaging the length in the electron micrograph and correcting at an imaging magnification in the same manner as in the case of the silver nano-disk described above. The rod length L which is the major axis length of the silver nanorod is smaller than the wavelength $\lambda$ of the light which prevents reflection and is preferably 0.8 times or less of $\lambda$, more preferably 0.6 times or less, and particularly preferably 0.5 times or less. A lower limit value of the rod length is not particularly limited, but is preferably 1 nm or more, more preferably 2 nm or more, and particularly preferably 5 nm or more. Specifically, the rod length L is preferably 50 nm or more and 300 nm or less.

(Diameter and Aspect Ratio of Silver Nanorod)

The diameter $\varphi$ (equivalent circle diameter) of the silver nanorod can be calculated from images of AFM or TEM obtained by the same method as the method of measuring the thickness of the silver nano-disk. The equivalent circle diameter may be calculated by a known method in which the images of AFM or TEM are acquired, an area of the cross section from the image of the cross section perpendicular to a longitudinal direction of the acquired rod is measured and is corrected at an imaging magnification. The diameter $\varphi$ of the silver nanorod is smaller than 0.5 times of the wavelength $\lambda$ of the light which prevents reflection and is preferably 0.4 times or less of $\lambda$, more preferably 0.3 times or less, and particularly preferably 0.1 times or less.

In a case where the silver nanoparticles are the silver nanorods, the ratio $L/\varphi$ (aspect ratio) of the rod length L to the equivalent circle diameter $\varphi$ is preferably 3 to 40, and is more preferably 5 to 40, from the viewpoint of reducing absorption of a visible light ray and a haze. In a case where the aspect ratio is greater than or equal to 3, it is possible to suppress the absorption of the visible light ray, and in a case where the aspect ratio is less than 40, it is also possible to suppress a haze in a visible range.

-Binder-

The binder 33 in the silver nanoparticle layer 36 preferably contains a polymer, and more preferably contains a transparent polymer. Examples of the polymer include a polymer such as a polyvinyl acetal resin, a polyvinyl alcohol resin, a polyvinyl butyral resin, a polyacrylate resin, a polymethyl methacrylate resin, a polycarbonate resin, a polyvinyl chloride resin, a (saturated) polyester resin, a polyurethane resin, and a natural polymer such as gelatin or cellulose. Among them, a polymer is preferable in which a main polymer is a polyvinyl alcohol resin, a polyvinyl butyral resin, a polyvinyl chloride resin, a (saturated) polyester resin, and a polyurethane resin, and a polymer is more preferable in which the main polymer is a polyester resin and a polyurethane resin, from the viewpoint of allowing greater than or equal to 80 number% of the silver nanoparticles to be easily present in a range of d / 2 from the surface of the silver

nanoparticle layer.

Two or more types of binders may be used in combination.

Among the polyester resins, the saturated polyester resin does not have a double bond, and thus, is particularly preferable from the viewpoint of imparting excellent weather fastness. In addition, a polyester resin having a hydroxyl group or a carboxyl group in a molecular terminal is more preferable from the viewpoint of obtaining high hardness, high durability, and high heat resistance by being cured with a water-soluble and water-dispersible curing agent or the like.

A commercially available polymer can be preferably used as the polymer. Examples of the commercially available polymer include PLASCOAT Z-687 manufactured by GOO CHEMICAL CO., LTD., which is a water-soluble polyester resin, HYDRAN HW-350 manufactured by DIC Corporation, which is a polyester polyurethane copolymer product, and the like.

In addition, in the present specification, the main polymer contained in the silver nanoparticle layer indicates a polymer component occupying greater than or equal to 50% by mass of the polymer contained in the silver nanoparticle layer.

A content of a polyester resin and a polyurethane resin with respect to the silver nanoparticles contained in the silver nanoparticle layer is preferably 1% to 10,000% by mass, is more preferably 10% to 1,000% by mass, and is particularly preferably 20% to 500% by mass.

It is preferable that a refractive index of the binder is 1.4 to 1.7. The refractive index refers to a numerical value at a wavelength of 550 nm. Hereinafter, unless otherwise particularly specified, the refractive indices refer to refractive indices at a wavelength of 550 nm in the present specification.

It is preferable that the binder 33 contains an organic component in which a solubility product $pK_{sp}$ with respect to a silver ion is 14 or greater, or a reduction potential is less than 700 mV. It is particularly preferable that the binder 33 contains an organic component in which a solubility product $pK_{sp}$ with respect to a silver ion is 14 or greater, and a reduction potential is less than 700 mV. Examples of an additive having such an organic component include 1-phenyl-1H-tetrazole-5-thiol, 5-amino-1,3,4-thiadiazole-2-thiol, 5-phenyl 1,3,4-oxadiazole-2-thiol, methylureidophenyl mercaptotetrazole, or the like. Furthermore, it is preferable to add $0.1 \times 10^{-5}$ mol/m$^2$ to $10 \times 10^{-5}$ mol/m$^2$ of these additives. In a case where an addition amount is $0.1 \times 10^{-5}$ mol or more, an effect of the ozone gas resistance to be described later can be sufficiently exerted, and in a case where the addition amount is $10 \times 10^{-5}$ mol/m$^2$ or less, aggregation of the silver particles can be suppressed.

<Layer of Low Refractive Index>

The refractive index of the layer of low refractive index 38 is smaller than the refractive index of the transparent substrate. In addition, the refractive index of the layer of low refractive index 38 is preferably lower than a refractive index of the transparent substrate 10. The refractive index of the layer of low refractive index is preferably lower than or equal to 1.40. For example, the refractive index of the layer of low refractive index may be approximately 1.35. An optical film thickness of the layer of low refractive index is preferably 30 nm to 100 nm. For example, the optical film thickness of the layer of low refractive index is approximately 70 nm.

The layer of low refractive index 38 contains, for example, a binder, refractive index controlling particles, and a surfactant and further contains additional components as necessary.

The binder in the layer of low refractive index is not particularly limited and can be suitably selected according to the purpose, and examples of the binder include a thermosetting or photocurable resin such as an acrylic resin, a silicone-based resin, a melamine-based resin, a urethane-based resin, an alkyd-based resin, and a fluorine-based resin, and the like.

The refractive index controlling particles are added in order to adjust the refractive index and can be suitably selected according to the purpose, and examples of the refractive index suppressing particles include hollow silica, and the like.

<Transparent Substrate>

The transparent substrate 10 is not particularly limited insofar as the transparent substrate is optically transparent with respect to an incidence ray having a predetermined wavelength $\lambda$ and can be suitably selected according to the purpose. The transparent substrate 10 is a transparent substrate having visible light transmittance of greater than or equal to 70%, and a transparent substrate having visible light transmittance of greater than or equal to 80% is more preferable.

The transparent substrate 10 may be a film shape, may have a single layer structure, or may have a laminated structure, and the size thereof may be determined according to the application.

Examples of the transparent substrate 10 include a film or a laminated film thereof which is formed of a polyolefin-based resin such as polyethylene, polypropylene, poly-4-methyl pentene-1, and polybutene-1; a polyester-based resin

such as polyethylene terephthalate and polyethylene naphthalate; a polycarbonate-based resin, a polyvinyl chloride-based resin, a polyphenylene sulfide-based resin, a polyether sulfone-based resin, a -based resin, a polyphenylene ether-based resin, a styrene-based resin, an acrylic resin, a polyamide-based resin, a polyimide-based resin, and a cellulose-based resin such as cellulose acetate, and the like. Among them, a triacetyl cellulose (TAC) film and a polyethylene terephthalate (PET) film are particularly suitable.

The thickness of the transparent substrate 10 is generally approximately 10 μm to 500 μm. The thickness of the transparent substrate 10 is more preferably 10 μm to 100 μm, is even more preferably 20 to 75 μm, and is particularly preferably 35 to 75 μm. In a case where the thickness of the transparent substrate 10 is sufficiently thick, adhesion failure tends to rarely occur. In addition, in a case where the thickness of the transparent substrate 10 is sufficiently thin, the transparent substrate 10 is not excessively strong as a material, and thus, tends to be easily used for construction in a case of being adhered onto a window glass of a building material or an automobile as an antireflection film. Further, by setting the transparent substrate 10 to be sufficiently thin, visible light transmittance tends to increase, and costs of raw materials tend to be reduced.

In a case where a PET film is used as the transparent substrate 10, a biaxially stretched product is preferably used, from the viewpoint of stiffness. It is preferable that the PET film includes an easily adhesive layer on a surface on which the antireflection structure is formed. This is because it is possible to suppress Fresnel reflection occurring between the PET film and a layer to be laminated and to further increase an antireflection effect by using the PET film including the easily adhesive layer. It is preferable that the film thickness of the easily adhesive layer is set such that an optical path length becomes 1/4 with respect to a wavelength at which reflection is planned to be prevented. Furthermore, it is preferable that a refractive index of the easily adhesive layer is lower than a refractive index of the PET film (1.66, in a case of a biaxially stretched product) and higher than the refractive index of the hard coat layer, and it is particularly preferable that the refractive index of the easily adhesive layer is close to an intermediate value between the refractive index of the PET film and the refractive index of the hard coat layer (a refractive index of 1.56 to 1.6). Examples of the PET film including such an easily adhesive layer include LUMIRROR manufactured by TORAY INDUSTRIES, INC., COSMOSHINE manufactured by TOYOBO CO., LTD., and the like.

The antireflection film of the present invention may include additional layers besides each of the above-described layers. Hereinafter, the configuration of the antireflection film of the embodiment including other layers will be described.

Fig. 5 is a schematic cross-sectional view illustrating a laminated structure of an antireflection film 2 of a second embodiment of the present invention. In Fig. 5, the same reference numerals are given to elements equivalent to those of the antireflection film 1 of the first embodiment. The same applies to the following drawings.

The antireflection film 2 of this embodiment is different from the antireflection film 1 of the first embodiment in that a hard coat layer 20 is provided between the transparent substrate 10 and the silver nanoparticle layer 36.

As described above, the hard coat layer 20 is a layer having hardness of greater than or equal to B, preferably hardness of greater than or equal to HB in a pencil hardness test. By sandwiching the hard coat layer 20 between the transparent substrate 10 and the antireflection layer 30, it is possible to prevent scratch and peeling from occurring due to packaging, transportation, bonding, or cleaning. By providing the hard coat layer, it is possible to prevent scratch and peeling from occurring due to bonding or cleaning.

It is preferable that the hard coat layer 20 is configured with a material that does not have absorption in the visible light range, from the viewpoint of transparency. The hard coat layer 20 may include a particle consisting of a metal oxide. It is preferable that the particle that is added has a refractive index that is close to the resin described below that configures the layer and has a particle diameter of less than or equal to 200 nm, from the viewpoint of preventing inside haze. As a raw material of the hard coat layer, an auxiliary for compatibilization such as an auxiliary for film formation is used in combination, or selection of materials having good compatibility with each other is suitably used.

The refractive index of the hard coat layer 20 is preferably from 1.5 to 1.6.

The material of the hard coat layer 20 is not particularly limited insofar as the layer satisfies the above conditions. The kind of the material and the formation method can also be suitably selected according to the purpose, and examples of the kind of the material include an acrylic resin, a silicone-based resin, a melamine-based resin, a urethane-based resin, an alkyd-based resin, a fluorine-based resin, and the like. Among these, a urethane-based resin is preferable, and, from the viewpoint of forming a bond with the upper layer, a material having a reactive group such as a silanol group in the side chain is more preferable. A thickness of the hard coat layer is not particularly limited and can be suitably selected according to the purpose. From the viewpoint of improving scratch resistance when water is interposed, the thickness is preferably more than or equal to 1 μm, and from the viewpoint of coating properties and stiffness of a coating layer-containing film, the thickness is preferably less than or equal to 50 μm and is more preferably less than or equal to 10 μm.

The hard coat layer 20 may be an ultraviolet curable resin containing a polymerization initiator or a thermosetting resin, but is particularly preferably a cured product of an aqueous resin composition which can be cured without using a polymerization initiator.

Here, the aqueous resin composition refers to a composition having a property of solidifying upon removing

an aqueous solvent that is contained in the composition. In general, examples of the kind of the aqueous resin composition include a forcibly emulsified resin obtained by forcibly emulsifying a resin which does not have emulsifying properties and water-solubility using a surfactant or the like, a self-emulsifying resin which is obtained by emulsifying and dispersing a resin having self-emulsifying properties, a water-soluble resin obtained by dissolving a resin having water-solubility, and the like. The forcibly emulsified resin and the self-emulsifying resin are in a dispersed state in which the resin has a particle diameter at the composition level. The water-soluble resin is in a dissolved state in which the resin does not have a particle diameter at the composition level.

The fact that the hard coat layer is formed of the cured product of the aqueous resin composition can be confirmed by observing a TEM image of the hard coat layer or by composition analysis. Specifically, in a dispersion of the forcibly emulsified resin, the self-emulsifying resin, and the like, a grain boundary is observed on a dried film surface in the TEM image. In a case of the water-soluble resin, the resin has many hydrophilic groups on a terminal group or a side chain, and thus, the resin can be determined by analysis. The cured product of the aqueous resin composition can be distinguished from an ultraviolet ray curable resin compound or a thermosetting resin compound that requires a polymerization initiator in that the cured product of the aqueous resin composition does not contain a polymerization initiator.

The aqueous solvent is a dispersion medium of which a main component is water, and a content of water contained in the solvent is preferably 70% to 100% and is more preferably 80% to 100%. As a solvent other than water, a solvent that is soluble in water, for example, alcohols such as methanol, ethanol, and isopropyl alcohol, ketones such as acetone and methylethyl ketone, glycol ethers such as N-methylpyrrolidone (NMP), tetrahydrofuran, and butyl cellosolve, and the like, is preferably used. In addition, in order to improve dispersion stability of a polymer in the aqueous resin composition, coating properties, and coating film properties after drying, the aqueous solvent may include a surfactant, ammonia, and amines such as triethylamine and N,-N dimethylethanolamine at several percent with respect to the dispersion.

Specific examples of a resin in the aqueous resin composition include polyester, polyolefin, polyester, an acrylic resin, polyurethane, and the like. From the viewpoint of favorable hardness and transparency of the coated film that is formed, it is preferable that the aqueous resin composition contains at least one resin selected from the group consisting of polyurethane and an acrylic resin.

(Acrylic Resin)

The acrylic resin used as the resin in the aqueous resin composition is a resin including a monomer having at least one group selected from an acryloyl group and a methacryloyl group as a polymerization component. In a case where the total mass of the acrylic resin is set as 100% by mass, a resin in which the total mass of a repeating unit formed by polymerization exceeds 50% by mass is preferable. Here, the monomer having at least one group selected from an acryloyl group and a methacryloyl group will be hereinafter referred to as a "(meth)acrylic monomer" as appropriate.

The acrylic resin is obtained by homopolymerization of a (meth)acrylic monomer or by copolymerization of the (meth)acrylic monomer with another monomer.

In a case where the acrylic resin is a copolymer of the (meth)acrylic monomer and another monomer, another monomer that is subjected to copolymerization with the (meth)acrylic monomer may be any monomer having a carbon-carbon double bond and may be any monomer having an ester bond or a urethane bond.

The copolymer of the (meth)acrylic monomer and another monomer may be any one of a random copolymer, a block copolymer, and a graft copolymer.

Here, a mixture containing another polymer, such as a polyester resin and a urethane resin, which is a polymer obtained by homopolymerizing the (meth)acrylic monomer or copolymerizing the (meth)acrylic monomer with another monomer in a solution or a dispersion liquid of a polymer other than the acrylic resin, such as a polymer obtained by homopolymerizing the (meth)acrylic monomer or copolymerizing the (meth)acrylic monomer with another monomer in a polyester solution or a polyester dispersion liquid, a polymer obtained by homopolymerizing the (meth)acrylic monomer or copolymerizing the (meth)acrylic monomer with another monomer in a polyurethane solution or a polyurethane dispersion liquid, and the like, is included in the acrylic resin.

In order to further improve adhesiveness to a layer that adjoins the hard coat layer, the acrylic resin may also have at least one group selected from a hydroxy group and an amino group.

Specific examples of the (meth)acrylic monomer that can be used in the synthesis of the acrylic resin is not particularly limited. Representative examples of the (meth)acrylic monomer include (meth)acrylic acid; hydroxyalkyl (meth)acrylate such as 2-hydroxyethyl (meth)acrylate, 2-hydroxypropyl (meth)acrylate, and 4-hydroxybutyl (meth)acrylate; alkyl (meth)acrylate such as methyl (meth)acrylate, ethyl (meth)acrylate, propyl (meth)acrylate, butyl (meth)acrylate, and lauryl (meth)acrylate; (meth)acrylamide; N-substituted acrylamide such as diacetone acrylamide and N-methylol acrylamide; (meth)acrylonitrile; a silicon-containing (meth)acrylic monomer such as γ-methacryloxypropyltrimethoxysilane, and the like.

In addition, a commercially available acrylic resin may also be used. Examples of a commercially available product of the acrylic resin that can be used in the hard coat layer include JURYMER (registered trademark) ET-410 (manufactured by TOAGOSEI CO., LTD.), AS-563A (trade name: manufactured by DAICEL FINECHEM LTD.), BONRON (registered trademark) XPS-002 (manufactured by Mitsui Chemicals, Inc.), and the like.

(Polyurethane Resin)

A polyurethane resin is a collective term for a polymer having a urethane bond in the main chain, and the polyurethane resin is generally a product of a reaction between diisocyanate and polyol.

Examples of the diisocyanate used in the synthesis of the polyurethane resin include toluene diisocyanate (TDI), diphenylmethane diisocyanate (MDI), naphthalene diisocyanate (NDI), tolidine diisocyanate (TODI), hexamethylene diisocyanate (HDI), isophorone diisocyanate (IPDI), and the like.

Examples of the polyol used in the synthesis of the polyurethane resin include ethylene glycol, propylene glycol, glycerin, hexanetriol, and the like.

As the polyurethane resin used as the resin in the aqueous resin composition, a polyurethane resin of which, by performing a chain elongation treatment, the molecular weight has been increased compared to the polyurethane resin obtained by the reaction between diisocyanate and polyol can be used, in addition to a general polyurethane resin.

The diisocyanate, the polyol, and the chain elongation treatment described in relation to the polyurethane resin are described in detail, for example, in "Polyurethane Handbook" (edited by Iwata Keiji, NIKKAN KOGYO SHIMBUN, LTD., published in 1987), and description in "Polyurethane Handbook" regarding the polyurethane resin and raw materials thereof can be applied in the present invention according to the purpose.

A commercially available polyurethane resin may also be used. Examples of the commercially available product include SUPERFLEX (registered trademark) 470, 210, 150HS, and 150HF and ELASTRON (registered trademark) H-3 (all manufactured by DKS Co. Ltd.), HYDRAN (registered trademark) AP-20, AP-40F, and WLS-210 (all manufactured by DIC Corporation), TAKELAC (registered trademark) W-6061, WS-5100, WS-4000, and WSA-5920 and OLESTER (registered trademark) UD-350 (all manufactured by Mitsui Chemicals, Inc.), and the like. Among these, from the viewpoint of having a silanol group, WS-5100 and WS-4000 are particularly preferable.

The hard coat layer 20 is preferably formed by coating the transparent substrate with the aqueous resin composition and drying the aqueous resin composition. At this time, a thickness of the coated film is preferably adjusted such that a dried film thickness is from 1 μm to 10 μm.

In the antireflection film, as described above, it is preferable that a total amount of an unreacted polymerization initiator contained in a layer other than the transparent substrate is 50 $mg/m^2$ or less, from the viewpoint of improving ozone gas resistance. In a case where the hard coat layer 20 is made of a cured product of a water-based composition, an amount of unreacted polymerization initiator in the hard coat layer 20 can be dramatically decreased compared to a case of using an ultraviolet curable resin or a thermosetting resin. Therefore, in the case where the hard coat layer 20 made of a cured product of the water-based composition is provided, even in the antireflection film including the hard coat layer, it is possible that a total amount of the unreacted polymerization initiator contained in a layer other than the transparent substrate easily becomes 50 $mg/m^2$ or less.

An ultraviolet absorbent may be added to the hard coat layer 20. The ultraviolet absorbent is not particularly limited, however, it is preferable to use a compound having a triazine ring independently or a mixture obtained by mixing a plurality of ultraviolet absorbents. By including the ultraviolet absorbent in the hard coat layer 20, it is possible to suppress yellowing of the transparent substrate in a case where the antireflection film is exposed to the solar light for a long period of time.

Fig. 6 is a schematic cross-sectional view illustrating a layer configuration of an antireflection film 3 of a third embodiment of the present invention. As shown in Fig. 6, the antireflection film of the present invention may include the layer of high refractive index 32 and the hard coat layer 20 between the transparent substrate 10 and the silver nanoparticle layer 36. By providing the layer of high refractive index 32, the antireflection performance can be improved.

In a case where the layer of high refractive index 32 and the hard coat layer 20 are provided, it is preferable to dispose the layer of high refractive index 32 between the silver nanoparticle layer 36 and the hard coat layer 20 as shown in Fig. 6. However, the hard coat layer 20 may be disposed between the silver nanoparticle layer 36 and the layer of high refractive index 32.

In the case where the layer of high refractive index 32 is disposed between the silver nanoparticle layer 36 and the hard coat layer 20, an optical thickness of the layer of high refractive index 32 is preferably $\lambda/4$ or less. In this case, it is preferable that a physical thickness of the layer of high refractive index 32 is specifically 200 nm or less.

On the other hand, in the case where the hard coat layer 20 is disposed between the silver nanoparticle layer 36 and the layer of high refractive index 32, the optical thickness of the layer of high refractive index 32 is preferably $\lambda/2$ or less. In this case, it is preferable that the physical thickness of the layer of high refractive index 32 is specifically 300

nm or less.

<Layer of High Refractive Index>

The refractive index of the layer of high refractive index 32 may be higher than the refractive index of the hard coat layer 20, and the refractive index of the layer of high refractive index 32 is 1.55 or higher and is particularly preferably 1.6 or higher. An upper limit of the refractive index of the layer of high refractive index 32 is not particularly limited, but is preferably less than or equal to 2.6, more preferably less than or equal to 2.0, and particularly preferably less than or equal to 1.8.

In a case where the refractive index of the layer of high refractive index 32 is 1.55 or higher, a constituent material thereof is not particularly limited. For example, the layer of high refractive index 32 contains a binder, metal oxide fine particles, a matting agent, and a surfactant, and contains other components as necessary. The binder is not particularly limited, and can be suitably selected according to the purpose, and examples of the binder include a thermosetting resin or a photocurable resin such as an acrylic resin, a silicone-based resin, a melamine-based resin, a urethane-based resin, an alkyd-based resin, and a fluorine-based resin, and the like.

The material of the metal oxide fine particles is not particularly limited insofar as the material having a refractive index higher than the refractive index of the binder are used, and can be suitably selected according to the purpose, and examples of material of the metal oxide fine particles include tin-doped indium oxide (hereinafter, simply referred to as "ITO"), zinc oxide, titanium oxide, zirconium oxide, and the like.

<Additional Layers and Components>

The antireflection film of the present invention may have layers and components other than the layers described in the first to third embodiments.

[Infrared Ray Absorbing Compound-Containing Layer]

The antireflection film of the present invention may include an infrared ray absorbing compound-containing layer containing a compound having absorbance in the infrared range, in order to shield a heat ray. Hereinafter, a layer containing the compound having absorbance in the infrared range is referred to as an infrared ray absorbing compound-containing layer. The infrared ray absorbing compound-containing layer may take a role of other functional layers.

[Pressure Sensitive Adhesive Layer]

The antireflection film of the present invention may include a pressure sensitive adhesive layer (hereinafter, referred to as a pressure sensitive adhesion layer). A material usable for forming the pressure sensitive adhesion layer is not particularly limited, and is able to be suitably selected according to the purpose. Examples of the material include a polyvinyl butyral (PVB) resin, an acrylic resin, a styrene/acrylic resin, a urethane resin, a polyester resin, a silicone resin, a natural rubber, a synthetic rubber, and the like. One these materials may be independently used, or two or more of these materials may be used in combination. The pressure sensitive adhesion layer formed of such materials can be formed by coating or lamination.

Further, an antistatic agent, a lubricant, an antiblocking agent, and the like may be added to the pressure sensitive adhesion layer.

It is preferable that the thickness of the pressure sensitive adhesion layer is 0.1 $\mu$m to 50 $\mu$m.

[Back Coating Layer]

The antireflection film may include a back coating layer on a surface of the transparent substrate on a side opposite to the surface on which the antireflection layer is formed. The back coating layer is not particularly limited and can be suitably selected according to the purpose, and the back coating layer may be a layer containing a compound having absorbance in the infrared range or may be a metal oxide particle-containing layer described below. In a case where a PET film is used as the transparent substrate, it is suitable to use an easily adhesive layer of the PET film as the back coating layer.

[Metal Oxide Particles]

The antireflection film of the present invention may contain at least one type of metal oxide particles in order to shield a heat ray.

A material of the metal oxide particles is not particularly limited and can be suitably selected according to the purpose, and examples of the material include ITO, antimony-doped tin oxide (hereinafter, simply referred to as "ATO"), zinc oxide, zinc antimonate, titanium oxide, indium oxide, tin oxide, antimony oxide, glass ceramics, lanthanum hexaboride ($LaB_6$), cesium tungsten oxide ($Cs_{0.33}WO_3$, hereinafter, simply referred to as "CWO"), and the like. Among them, ITO, ATO, CWO, and lanthanum hexaboride ($LaB_6$) are more preferable from the viewpoint of excellent heat ray absorptive power and of manufacturing an antireflection structure having wider heat ray absorptive power by being combined with the flat plate particles, and ITO is particularly preferable from the viewpoint of shielding greater than or equal to 90% of an infrared ray of greater than or equal to 1,200 nm and of visible light transmittance of greater than or equal to 90%.

It is preferable that a volume average particle diameter of primary particles of the metal oxide particles is less than or equal to 0.1 μm in order not to decrease visible light transmittance.

The shape of the metal oxide particles is not particularly limited, is able to be suitably selected according to the purpose, and examples of the shape of the metal oxide particles include a spherical shape, a needle shape, a plate shape, and the like.

Next, as an example of a method of manufacturing the antireflection film of the present invention, a method of manufacturing the antireflection film 3 of the third embodiment will be briefly described.

The transparent substrate 10 is prepared, and, first, the hard coat layer 20 is formed on the transparent substrate 10. The formation method of the hard coat layer is preferably a coating method. A coating liquid at least containing a water-soluble resin or a water-dispersible resin and water is prepared as a coating liquid for forming a hard coat layer, and the coating liquid is applied onto the transparent substrate and dried, and thus the hard coat layer 20 is formed.

Next, the layer of high refractive index 32 is formed on the hard coat layer 20. The formation method of the layer of high refractive index is preferably a coating method. A coating liquid for forming a layer of high refractive index is prepared, and the coating liquid for forming a layer of high refractive index is applied onto the hard coat layer 20 using a method of coating by a dip coater, a die coater, a slit coater, a bar coater, a gravure coater, or the like. Thereafter, the layer of high refractive index 32 is obtained by curing the coating liquid by light irradiation or heating, according to the resin constituting the binder of the layer of high refractive index.

Next, the silver nanoparticle layer 36 is formed on the layer of high refractive index 32. The formation method of the silver nanoparticle layer is not particularly limited, and examples thereof include a coating method, and a method of performing plane alignment using a method such as an LB film method, a self-organization method, and spray coating. A dispersion liquid containing silver flat plate particles (silver nanoparticle dispersion liquid) is applied using a dip coater, a die coater, a slit coater, a bar coater, a gravure coater, or the like, as a coating liquid for forming a silver nanoparticle layer. Thereafter, the silver nanoparticle layer is obtained by curing the coating liquid by light irradiation or heating, according to the resin constituting the binder of the silver nanoparticle layer.

Furthermore, in order to accelerate the plane alignment, the silver nanoparticle layer may pass through a pressure bonding roller such as a calender roller or a laminating roller, after applying the coating liquid for forming a silver nanoparticle layer.

Subsequently, the layer of low refractive index 38 is formed on the silver nanoparticle layer 36. The formation method of the layer of low refractive index is preferably a coating method. A coating liquid for forming a layer of low refractive index is prepared, and the coating liquid for forming a layer of low refractive index is applied onto the silver nanoparticle layer 36 using a method of coating by a dip coater, a die coater, a slit coater, a bar coater, a gravure coater, or the like. Thereafter, the layer of low refractive index 38 is obtained by curing the coating liquid by light irradiation or heating, according to the resin constituting the binder of the layer of low refractive index.

The antireflection film 3 can be produced by the above steps.

[Functional Glass]

The antireflection film of the present invention is used by being adhered to at least one of the front surface or the back surface of the glass plate to which functionality is planned to be imparted. That is, a functional glass of the present invention is formed by adhering the antireflection film of the present invention to at least one surface side thereof.

Fig. 7 is a schematic cross-sectional view illustrating a configuration example of a functional glass of the present invention.

A functional glass 100 shown in Fig. 7 includes a glass plate 50, a first antireflection film 11 adhered to one surface of the glass plate 50, and a second antireflection film 12 adhered to the other surface of the glass plate 50. Both of the first and second antireflection films 11 and 12 are an embodiment of the antireflection film of the present invention. The first and second antireflection films 11 and 12 may have the same reflection condition or may have reflection conditions different from each other. In a case where materials and film thicknesses of the layer of low refractive index and the layer of high refractive index, a thickness of the silver nanoparticle layer, and/or a content of the silver nanoparticles are different, reflection conditions such as reflectivity on the front surface and the back surface of the film, and a wavelength range having desired reflectivity are generally different from each other.

The glass plate 50 is a glass which is applied to a window of an architectural structure, a shop window, a car window, or the like.

Both of the first and second antireflection films 11 and 12 include a pressure sensitive adhesive layer 9 on the back surface of the transparent substrate 10, and the first and second antireflection films 11 and 12 adhere to one surface and the other surface of the glass plate 50 through the pressure sensitive adhesive layer 9.

The functional glass which includes the antireflection film of the present invention has high visible light transmittance from the side on which the antireflection film adheres and a clear visual field. In addition, the functional glass has high radio wave transmittance and does not interrupt a radio wave of a mobile phone.

In a case where the antireflection film adheres to the window glass, the pressure sensitive adhesive layer may be provided on the surface of the transparent substrate of the antireflection film on the side on which the antireflection layer is not formed by coating or lamination, an aqueous solution containing a surfactant (mainly a nonionic surfactant) may be sprayed onto the surface of the window glass and the pressure sensitive adhesive layer surface of the antireflection film in advance, and thus, the antireflection film may be disposed on the window glass through the pressure sensitive adhesive layer. The pressure sensitive adhesive force of the pressure sensitive adhesive layer is low until moisture is evaporated, and thus, the position of the antireflection structure on the glass surface can be adjusted. The adhesion position of the antireflection structure with respect to the window glass is determined, and then, moisture remaining between the window glass and the antireflection film is swept away from the center of the glass towards an end portion by using a squeegee or the like, and thus, the antireflection film can be fixed onto the surface of the window glass. Thus, the antireflection film can be disposed on the window glass.

Imparting functionality to the window glass is attained by a method such as heating or pressure lamination in which the antireflection film mechanically adheres onto the glass plate by using laminator equipment. A laminator is prepared in which the glass plate passes through a slit area interposed between an heated metal roll or a rubber roll having heat resistance from an upper portion and a rubber roll having heat resistance which is at room temperature or is heated from a lower portion. The antireflection film is placed on the glass plate such that the pressure sensitive adhesive surface is in contact with the glass surface, and the upper portion roll of the laminator is set to press the antireflection film, and thus, the glass plate passes through the laminator. In a case where the adhesion is performed by selecting a suitable roll heating temperature according to the type of pressure sensitive adhesive, the pressure sensitive adhesive force becomes strong, and thus, the adhesion can be performed such that air bubbles are not mixed thereinto. A case in which the antireflection film can be supplied in the shape of a roll, a tape-like film is continuously supplied to a heating roll from the upper portion, and the heating roll is set to have a wrap angle of approximately 90 degrees, is preferable. This is because the pressure sensitive adhesive layer of the antireflection film is preheated and is easily subjected to the adhesion, and both of elimination of the air bubbles and an improvement in the pressure sensitive adhesive force are able to be high dimensionally attained.

## Examples

Hereinafter, examples and comparative examples of the antireflection film of the present invention will be described.

First, preparation of various coating liquids used for preparing an antireflection film of Examples and Comparative Examples will be described.

In this example and comparative example, a silver nano-disk was used as a silver nanoparticle, and a silver nanoparticle layer was formed as a silver nano-disk layer.

### [Coating Liquid for Forming Hard Coat Layer]

#### (Coating Liquid A-1 for Forming Hard Coat Layer)

A coating liquid A-1 for forming a hard coat layer was prepared by mixing materials shown in Table 1, a binder, an ultraviolet absorbent, a surfactant, an auxiliary for film formation, and water, at formulation ratios indicated in Table 1.

[Table 1]

| Material of coating liquid A-1 | Parts by mass |
|---|---|
| Polyurethane aqueous dispersion: TAKELAC WS-4000 (manufactured by Mitsui Chemicals, Inc., solid contents of 30% by mass) | 520.9 |
| Triazine-based ultraviolet absorbent: (Tinuvin 479 DW manufactured by BASF SE, solid contents of 40% by mass) | 35.5 |

(continued)

| Material of coating liquid A-1 | Parts by mass |
|---|---|
| Surfactant: Sodium=bis(3,3,4,4,5,5,6,6-nonafluoro)=2-sulfoniteoxysuccinate (manufactured by FUJIFILM Finechemicals Co., Ltd., solid contents of 2% by mass, methanol solution) | 13 |
| 2-Butoxyethanol | 100 |
| Water | 342.3 |

(Coating Liquid A-2 for Forming Hard Coat Layer)

A coating liquid A-2 was obtained in the same manner as the coating liquid A-1 except that in the preparation of the coating liquid A-1, a polyurethane aqueous dispersion: TAKELAC WS-5100 (manufactured by Mitsui Chemicals, Inc., solid content 30% by mass) was added instead of a polyurethane aqueous dispersion: TAKELAC WS-4000.

(Coating Liquid A-3 for Forming Hard Coat Layer)

A coating liquid A-3 for forming a hard coat layer was prepared by mixing materials shown in Table 2, a monomer, an ultraviolet absorbent, an ultraviolet polymerization initiator (photopolymerization initiator), and a solvent, at formulation ratios indicated in Table 2.

[Table 2]

| Material of coating liquid A-3 | Parts by mass |
|---|---|
| A-TMMT: Pentaerythritol tetraacrylate (manufactured by Shin-Nakamura Chemical Co., Ltd., concentration of solid contents of 75% by mass) | 52 |
| AD-TMP: Ditrimethylolpropane tetraacrylate (manufactured by Shin-Nakamura Chemical Co., Ltd., concentration of solid contents of 100% by mass) | 19.18 |
| Leveling agent A Methyl ethyl ketone solution: The following compound (concentration of solid contents of 2% by mass) | 1.36 |
| Photopolymerization initiator IRGACURE 127 (manufactured by BASF Japan Ltd., concentration of solid contents of 100% by mass) | 2.53 |
| Methyl acetate | 10.61 |
| Methyl ethyl ketone | 14.31 |

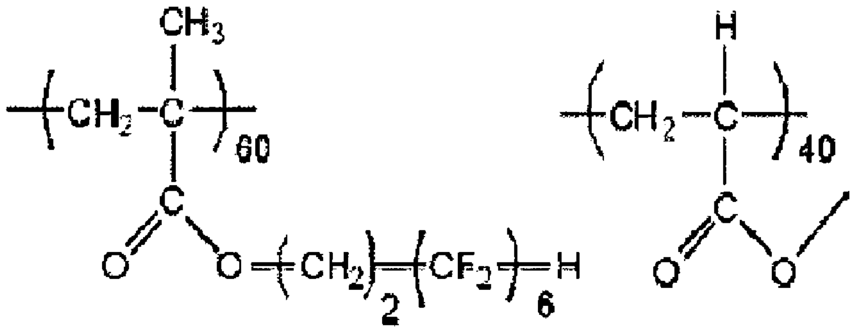

Mw: 25000

[Layer of High Refractive Index]

(Coating Liquid B-1 for Layer of High Refractive Index)

A coating liquid B-1 for a layer of high refractive index was prepared by mixing materials shown in Table 3 at formulation ratios shown in Table 3.

[Table 3]

| Material of coating liquid B-1 | Parts by mass |
|---|---|
| Polyurethane aqueous dispersion: TAKELAC WS-4000 (manufactured by Mitsui Chemicals, Inc., solid contents of 30% by mass, Tg: 136°C) | 8.8 |
| Zirconia aqueous dispersion: SZR-CW (manufactured by SAKAI CHEMICAL INDUSTRY CO., LTD., solid contents of 30% by mass) | 27.4 |
| Surfactant: Sodium=bis(3,3,4,4,5,5,6,6-nonafluoro)=2-sulfoniteoxysuccinate (manufactured by FUJIFILM Finechemicals Co., Ltd., solid contents of 2% by mass, methanol solution) | 5.3 |
| 2-Butoxyethanol | 50.0 |
| Water | 908.5 |

[Silver Nano-Disk Layer]

(Preparation of Coating Liquid C-1 for Silver Nano-Disk Layer)

A coating liquid C-1 for a silver nano-disk layer was prepared by mixing at formulation ratios of materials shown in Table 4.

[Table 4]

| Material of coating liquid C-1 | Parts by mass |
|---|---|
| Aqueous solution of polyurethane: HYDRAN HW-350 (manufactured by DIC Corporation, concentration of solid contents of 30% by mass) | 8.2 |
| Surfactant A: F LIPAL 8780P (manufactured by Lion Corporation, solid contents of 1% by mass) | 12.2 |
| Surfactant B: NAROACTY CL-95 (manufactured by Sanyo Chemical Industries, Ltd., solid contents of 1% by mass) | 14.8 |
| Silver nano-disk dispersion liquid c1B | 384.9 |
| 1-(5-Methylureidophenyl)-5-mercaptotetrazole (manufactured by Wako Pure Chemical Industries, Ltd., solid contents of 2% by mass) | 23.2 |
| Ethanol | 204.1 |
| Water | 352.6 |

A silver nano-disk dispersion liquid c1B in the above material was prepared as follows.

-Preparation of Silver Nano-Disk Dispersion Liquid c1A-

13 L of ion exchange water was measured in a reaction container of NTKR-4 (manufactured by Nippon Metal Industry Co., Ltd.), and 1.0 L of an aqueous solution of trisodium citrate (an anhydride) of 10 g/L was added and retained at 35°C while being stirred by using a chamber including an agitator in which four propellers of NTKR-4 and four paddles of NTKR-4 were attached to a shaft of SUS316L. 0.68 L of an aqueous solution of a polystyrene sulfonic acid of 8.0 g/L was added, and 0.041 L of an aqueous solution of sodium boron hydride which was prepared to be 23 g/L by using an aqueous solution of sodium hydroxide of 0.04 N was further added. 13 L of an aqueous solution of silver nitrate of 0.10 g/L was added at 5.0 L/min.

1.0 L of an aqueous solution of trisodium citrate (an anhydride) of 10 g/L and 11 L of ion exchange water were added, and 0.68 L of an aqueous solution of potassium hydroquinone sulfonate of 80 g/L was further added. Stirring was performed at 800 rpm, and 8.1 L of an aqueous solution of silver nitrate of 0.10 g/L was added at 0.95 L/min, and then, and the temperature was lowered to 30°C.

8.0 L of an aqueous solution of methyl hydroquinone of 44 g/L was added, and then, the total amount of a gelatin aqueous solution at 40°C described below was added. Stirring was performed at 1,200 rpm, and the total amount of a mixed liquid of a white precipitate of silver sulfite described below was added.

In a step where a pH change in the prepared liquid stopped, 5.0 L of an aqueous solution of NaOH of 1 N was added at 0.33 L/min. After that, 0.078 L of an aqueous solution of 1,2-benzisothiazolin-3-one (dissolved by adjusting the aqueous solution to be alkaline with NaOH) of 70 g/L was further added. Thus, a silver nano-disk dispersion liquid c1A was prepared.

--Preparation of Gelatin Aqueous Solution--

16.7 L of ion exchange water was measured in a dissolving tank of SUS316L. 1.4 kg of alkali-treated osgoniale gelatin (GPC weight-average molecular weight of 200,000) which had been subjected to a deionization treatment was added while being stirred at a low speed in an agitator of SUS316L. Further, 0.91 kg of alkali-treated osgoniale gelatin (GPC weight-average molecular weight of 21,000) which has been subjected to a deionization treatment, a proteolytic enzyme treatment, and an oxidation treatment of peroxide hydrogen was added. After that, the temperature rose to 40°C, the gelatin was simultaneously swelled and dissolved, and thus, the gelatin was completely dissolved.

--Preparation of Mixed Liquid of White Precipitate of Silver Sulfite--

8.2 L of ion exchange water was measured in a dissolving tank of SUS316L, and 8.2 L of an aqueous solution of silver nitrate of 100 g/L was added. 2.7 L of an aqueous solution of sodium sulfite of 140 g/L was added for a short period of time while being stirred at a high speed in an agitator of SUS316L, and thus, a mixed liquid including a white precipitate of the silver sulfite was prepared. The mixed liquid was prepared immediately before being used.

-Preparation of Silver Nano-Disk Dispersion Liquid c1B-

800 g of the silver nano-disk dispersion liquid c1A described above was sampled into a centrifuge tube, and pH was adjusted to be 9.2 ± 0.2 at 25°C with NaOH of 1 N and/or a sulfuric acid of 1 N. The temperature was set to 35°C, and a centrifugal operation was performed at 9,000 rpm for 60 minutes by using a centrifugal separator (himacCR22GIII, an angle rotor R9A, manufactured by Hitachi Koki Co., Ltd.), and then, 784 g of a supernatant was removed. An aqueous solution of NaOH of 0.2 mM was added to the precipitated flat plate particles such that the total amount thereof was set to 400 g, and stirring was manually performed by using a stirring rod, and thus, a coarse dispersion liquid was obtained. By performing the same operation, coarse dispersion liquids were prepared in 24 centrifuge tubes such that the total amount was set to 9,600 g, and were added to a tank of SUS316L and mixed. Further, 10 cc of a solution of Pluronic31R1 (manufactured by BASF SE) of 10 g/L (diluted with a mixed liquid of Methanol:Ion Exchange Water = 1:1 (a volume ratio)) was added. A batch type disperse treatment was performed with respect to the coarse dispersion liquid mixture in the tank at 9,000 rpm for 120 minutes by using a 20 type automixer (a stirring portion is a homomixer MARKII) manufactured by PRIMIX Corporation. A liquid temperature during the dispersion was retained at 50°C. 800 g of the dispersion liquid thus obtained was again sampled in a centrifuge tube, the temperature was set to 35°C, and a centrifugal operation was performed at 9,000 rpm for 60 minutes by using a centrifugal separator (himacCR22GIII, an angle rotor R9A, manufactured by Hitachi Koki Co., Ltd.), and then, 760 g of a supernatant was removed. An aqueous solution of NaOH of 0.2 mM was added to the precipitated flat plate particles such that the total amount thereof was set to 800 g, and stirring was manually performed by using a stirring rod, and thus, a coarse dispersion liquid was obtained. By performing the same operation, coarse dispersion liquids were prepared in 12 centrifuge tubes such that the total amount was set to 9,600 g, and were added to a tank of SUS316L and mixed. Further, 10 cc of a solution of Pluronic31R1 (manufactured by BASF SE) of 10 g/L (diluted with a mixed liquid of Methanol:Ion Exchange Water = 1:1 (a volume ratio)) was added. A batch type disperse treatment was performed with respect to the coarse dispersion liquid mixture in the tank at 9,000 rpm for 120 minutes by using a 20 type automixer (a stirring portion is a homomixer MARKII) manufactured by PRIMIX Corporation. A liquid temperature during the dispersion was retained at 50°C. After the dispersion, the temperature was lowered to 25°C, and then, single-pass filtration was performed by using a PROFILE II filter (manufactured by Pall Corporation, a product type of MCY1001Y030H13).

Thus, the dispersion liquid c1A was subjected to a desalinization treatment and re-dispersion treatment, and thus, a silver nano-disk dispersion liquid c1B was prepared.

-Evaluation of Silver Nano-Disk-

It was confirmed that silver nano-disks having a hexagonal shape to a circular shape and a triangular shape were generated in the silver nano-disk dispersion liquid c1A. Silver nanoparticles in the dispersion liquid c1A were all silver nano-disks. An image obtained by TEM observation of the silver nano-disk dispersion liquid c1A was imported into image treatment software Image J, and an image treatment was performed. Any 500 particles extracted from TEM images in a plurality of visual fields were subjected to image analysis, and an equivalent circle diameter in the same

area was calculated. As a result of performing statistic processing based on the parent population, the average diameter was 118 nm.

The silver nano-disk dispersion liquid c1B was similarly measured, and thus, approximately the same result as that of the silver nano-disk dispersion liquid c1A, which also included the shape of a particle size distribution, was obtained.

In addition, the silver nano-disk dispersion liquid c1B was added dropwise onto a silicon substrate and was dried, and a thickness of each of the silver nano-disks was measured by a FIB-TEM method. Ten silver nano-disks in the silver nano-disk dispersion liquid c1B were measured, and the average thickness was 8 nm. That is, an aspect ratio represented by diameter/thickness was 14.8.

(Preparation of Coating Liquid C-2 for Silver Nano-Disk Layer)

A coating liquid C-2 was obtained by the same method as that for the preparation of the coating liquid C-1, except that in the preparation of the silver nano-disk dispersion liquid c1B in the preparation of the coating liquid C-1, a silver nano-disk dispersion liquid c2A was used instead of the silver nano-disk dispersion liquid c1A.

The silver nano-disk dispersion liquid c2A was obtained by adding 0.028 L of 0.1% by mass chloroauric acid (manufactured by Wako Pure Chemical Industries, Ltd.) aqueous solution to 50 L of the silver nano-disk dispersion liquid c1A, and stirring at 60°C for 4 hours.

(Preparation of Coating Liquid C-3 for Silver Nano-Disk Layer)

A coating liquid C-3 was obtained by the same method as that for the preparation of the coating liquid C-1, except that in the preparation of the silver nano-disk dispersion liquid c1B in the preparation of the coating liquid C-1, a silver nano-disk dispersion liquid c3A was used instead of the silver nano-disk dispersion liquid c1A.

The silver nano-disk dispersion liquid c3A was obtained by adding 0.28 L of 0.1% by mass chloroauric acid (manufactured by Wako Pure Chemical Industries, Ltd.) aqueous solution to 50 L of the silver nano-disk dispersion liquid c1A, and stirring at 60°C for 4 hours.

(Preparation of Coating Liquid C-4 for Silver Nano-Disk Layer)

A coating liquid C-4 was obtained by the same method as that for the preparation of the coating liquid C-1, except that in the prepartion of the silver nano-disk dispersion liquid c1B in the preparation of the coating liquid C-1, a silver nano-disk dispersion liquid c4A was used instead of the silver nano-disk dispersion liquid c1A.

The silver nano-disk dispersion liquid c4A was obtained by adding 2.78 L of 0.1% by mass chloroauric acid (manufactured by Wako Pure Chemical Industries, Ltd.) aqueous solution to 50 L of the silver nano-disk dispersion liquid c1A, and stirring at 60°C for 4 hours.

(Preparation of Coating Liquid C-5 for Silver Nano-Disk Layer)

A coating liquid C-5 was obtained by the same method as that for the preparation of the coating liquid C-1, except that in the prepartion of the silver nano-disk dispersion liquid c1B in the preparation of the coating liquid C-1, a silver nano-disk dispersion liquid c5A was used instead of the silver nano-disk dispersion liquid c1A.

The silver nano-disk dispersion liquid c5A was obtained by adding 2.78 L of 1.0% by mass chloroauric acid (manufactured by Wako Pure Chemical Industries, Ltd.) aqueous solution to 50 L of the silver nano-disk dispersion liquid c1A, and stirring at 60°C for 4 hours.

(Preparation of Coating Liquid C-6 for Silver Nano-Disk Layer)

A coating liquid C-3 was obtained by the same method as that for the preparation of the coating liquid C-1, except that in the prepartion of the silver nano-disk dispersion liquid c1B in the preparation of the coating liquid C-1, a silver nano-disk dispersion liquid c6A was used instead of the silver nano-disk dispersion liquid c1A.

The silver nano-disk dispersion liquid c6A was obtained by adding 5.56 L of 5.0% by mass chloroauric acid (manufactured by Wako Pure Chemical Industries, Ltd.) aqueous solution to 50 L of the silver nano-disk dispersion liquid c1A, and stirring at 60°C for 4 hours.

(Preparation of Coating Liquid C-7 for Silver Nano-Disk Layer)

A coating liquid C-7 was obtained by the same method as that for the coating liquid C-4, except that in the preparation of the coating liquids C-4, 1-(5-methylureidophenyl)-5-mercaptotetrazole was not added.

(Preparation of Coating Liquid C-8 for Silver Nano-Disk Layer)

A coating liquid C-8 was obtained by the same method as that for the coating liquid C-4, except that in the preparation of the coating liquids C-4, 1-phenyl-1H-tetrazole-5-thiol was added instead of 1-(5-methylureidophenyl)-5-mercaptotetrazole.

(Preparation of Coating Liquid C-9 for Silver Nano-Disk Layer)

A coating liquid C-9 was obtained by the same method as that for the coating liquid C-4, except that in the preparation of the coating liquids C-4, 5-amino-1,3,4-thiadiazole-2-thiol was added instead of 1-(5-methylureidophenyl)-5-mercaptotetrazole.

(Preparation of Coating Liquid C-10 for Silver Nano-Disk Layer)

A coating liquid C-10 was obtained by the same method as that for the coating liquid C-4, except that in the preparation of the coating liquids C-4, N-(3-(5-mercapto-1H-tetrazol-1-yl)phenyl)-3-(methyl(pyrrolidin-1-yl)aminopropanamide) was added instead of 1-(5-methylureidophenyl)-5-mercaptotetrazole.

[Layer of Low Refractive Index]

(Coating Liquid D-1 for Layer of Low Refractive Index)

A coating liquid D-1 for a layer of low refractive index was prepared by mixing at formulation ratios of materials shown in Table 5.

[Table 5]

| Material of coating liquid D-1 | Parts by mass |
|---|---|
| Ethyl methyl ketone | 831.16 |
| OPSTAR TU2361 (manufactured by JSR Corporation, solid contents of 10% by mass) | 142.80 |
| M-11 (the following chemical formula) | 17.94 |
| KAYARAD PET-30 (manufactured by Nippon Kayaku Co., Ltd., solid contents of 100% by mass) | 1.81 |
| MEK-ST-L (manufactured by Nissan Chemical Industries, Ltd., solid contents of 30% by mass) | 5.29 |
| Photopolymerization initiator: IRGACURE 127 (manufactured by BASF Japan Ltd., solid contents of 100% by mass) | 0.24 |
| SILAPLANE FM-0725 (manufactured by JNC Corporation, solid contents of 100% by mass) | 0.76 |

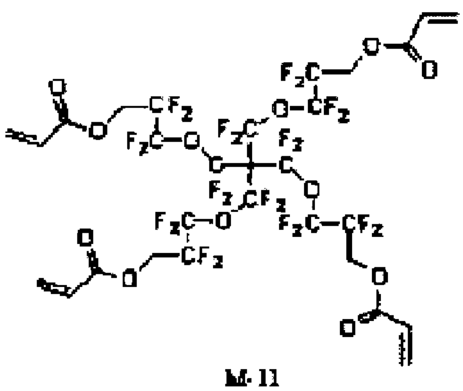

M-11

Compound M-11 was prepared by the method described in paragraphs [0017] to [0025] in JP2006-28280A.

Examples and comparative examples of the antireflection film of the present invention were respectively prepared using the coating liquids A-1 to A-3, B-1, and C-1 to C-10 obtained by being prepared by the methods described above. The layer configuration of each of examples and comparative examples (types of coating liquids used for each

layer) are collectively shown in Table 6.

[Table 6]

| | Hard coat layer | Layer of high refractive index | Silver nano-disk layer | Layer of low refractive index |
|---|---|---|---|---|
| Comparative example 1 | - | - | C-1 | D-1 |
| Comparative example 2 | - | - | C-4 | - |
| Example 1 | - | - | C-2 | D-1 |
| Example 2 | - | - | C-3 | D-1 |
| Example 3 | - | - | C-4 | D-1 |
| Example 4 | - | - | C-5 | D-1 |
| Example 5 | - | - | C-6 | D-1 |
| Example 6 | - | - | C-7 | D-1 |
| Example 7 | - | - | C-8 | D-1 |
| Example 8 | - | - | C-9 | D-1 |
| Example 9 | - | - | C-10 | D-1 |
| Example 10 | A-3 | - | C-4 | D-1 |
| Example 11 | A-3 | B-1 | C-4 | D-1 |
| Example 12 | A-3 | B-1 | C-4 | D-1 |
| Example 13 | A-2 | B-1 | C-4 | D-1 |
| Example 14 | A-1 | B-1 | C-4 | D-1 |

A preparation method of an antireflection film of each of Examples and Comparative Examples will be described.

[Comparative Example 1]

The coating liquid C-1 for the silver nano-disk layer was applied onto one surface of a polyethylene terephthalate (PET) film (U403, film thickness 75 of μm, manufactured by Toray Industries, Inc.) with an easily adhesive layer, which served as a transparent substrate, by using a wire bar such that the average thickness after being dried became 30 nm. After that, the coating liquid was heated, dried, and solidified at 130°C for 1 minute, and thus a silver nano-disk layer was formed. The coating liquid D-1 for a layer of low refractive index was applied onto the silver nano-disk layer thus formed by using a wire bar such that the average thickness after being dried became 70 nm, followed by heating and drying at 60°C for 1 minute. The coating liquid was irradiated with ultraviolet rays having an irradiation dose of 200 $mJ/cm^2$ using a metal halide (M04 - L41) UV lamp (manufactured by Eye Graphics) while purging with nitrogen so that an oxygen concentration was 0.1% or less so as to cure the coated film, and therefore a dielectric layer was formed.

An antireflection film of Comparative Example 1 in which the silver nano-disk layer, and the layer of low refractive index were laminated in this order on the transparent substrate formed of the PET film was obtained through the above steps. The antireflection film of Comparative Example 1 has the same configuration as that described in JP2015-129909A described in the section of Description of the Related Art.

[Comparative Example 2]

A film of Comparative Example 2 was prepared in the same manner as in Comparative Example 1 except that in Comparative Example 1, C-4 was used instead of the coating liquid C-1 for the silver nano-disk layer, and the layer of low refractive index was not formed.

[Examples 1 to 9]

Antireflection films of Examples 1 to 9 were obtained in the same manner as in Comparative Example 1, except that in Comparative Example 1, each of the coating liquids C-2 to C-10 shown in Table 6 was used instead of the coating liquid C-1 for the silver nano-disk layer.

[Example 10]

An antireflection film of Example 10 was obtained in the same manner as in Example 3, except that in Example 3, a hard coat layer was formed on one side of the transparent substrate before application of the coating liquid C-4 for the silver nano-disk layer, and the coating liquid C-4 for the silver nano-disk layer was coated on the hard coat layer. The coating liquid A-3 for the hard coat layer was applied on one surface of a PET with easily adhesive layer (polyethylene terephthalate) film (U403, film thickness 75 μm, manufactured by Toray Industries, Inc.) by using a wire bar such that the average thickness after being dried became 5 μm, followed by heating and drying at 90°C for 1 minute. The coating liquid was irradiated with ultraviolet rays having an irradiation dose of 100 $mJ/cm^2$ using a metal halide (M04 - L41) UV lamp (manufactured by Eye Graphics) while purging with nitrogen so that an oxygen concentration was 0.1% or less so as to cure the coated film, and therefore the hard coat layer was formed.

[Example 11]

A reflection film of Example 11 was obtained in the same manner as in Example 10, except that in Example 10, the hard coat layer was formed by using the coating liquid A-3, a layer of high refractive index was formed, and the coating liquid C-4 for the silver nano-disk layer was applied on the layer of high refractive index. The coating liquid B-1 for the layer of high refractive index was applied by using a wire bar such that the average thickness after being dried became 23 nm, and was heated and dried at 135°C for 2 minutes so as to be solidified, and therefore the layer of high refractive index was formed.

[Example 12]

An antireflection film of Example 12 was obtained in the same manner as in Example 11, except that in Example 11, the coating liquid A-3 was applied such that the average thickness of the hard coat layer became 1.5 μm.

[Example 13]

An antireflection film of Example 13 was obtained in the same manner as in Example 11, except that in Example 11, the method for forming the hard coat layer was changed as follows. In this example, the coating liquid A-2 was applied instead of the coating liquid A-3 such that the average thickness after being dried became 4 μm, and was heated and dried at 165°C for 2 minutes so as to be solidified, and therefore the hard coat layer was formed.

[Example 14]

An antireflection film of Example 14 was obtained in the same manner as in Example 13, except that in Example 13, the coating liquid A-1 was used instead of the coating liquid A-2.

The coating liquid A-3 for the hard coat layer used in Examples 10 to 12 contains an ultraviolet polymerization initiator and thus is polymerized by being irradiated with ultraviolet rays so to form the hard coat layer, whereas the coating liquids A-1 and A-2 for the hard coat layer used in Examples 13 and 14 are aqueous resin compositions which do not contain an ultraviolet polymerization initiator.

<Evaluation>

The following measurement and evaluation was performed on the antireflection films of each of the examples and the comparative examples.

[Atom% of Metal Other Than Silver Contained in Silver Nano-Disk Layer]

Elemental analysis was performed on each antireflection film by using μXRF (Micro X-ray Fluorescence) (ZSX Primus II manufactured by Rigaku Corporation) under conditions of tube voltage: 50 kV, tube current: 60 mA, mask/analytical diameter: 30 nmφ, and analysis line: Ag-Kα and Au-Lα.

The fluorescent X-ray intensity (kcps) of each of Ag and Au thus obtained was converted into atom% by a calibration curve created in advance using each aqueous solution of silver nitrate and chloroauric acid.
The values obtained in each comparative example and example are shown in Table 7.

[Measurement of Amount of Unreacted Ultraviolet Polymerization Initiator in Layers Other than Transparent Substrate]

The antireflection films (0.3 g) of each of the comparative examples and the examples thus prepared and methanol (10 g) were charged into a 100 mL eggplant flask and subjected to extraction in an oil bath at 80°C for 1 hour, and an elution amount of the unreacted photopolymerization initiator was quantitatively determined by LC-MS (Liquid Chromatograph Mass Spectrometer: LCMS-2010, manufactured by Shimadzu Corporation). The elution amount was calculated based on the calibration curve created in advance with the photopolymerization initiator and converted into an amount (mg/$m^2$) per $m^2$. This amount was taken as a total amount of the unreacted ultraviolet polymerization initiator. Table 7 shows the values obtained in each example and comparative example.

[Measurement of $pK_{sp}$ Value of Additives Added to Silver Nano-disk Layer]

A solubility product $K_{sp}$ with a silver ion was measured by referring to "Kaori Sakaguchi, Shinichi Kikuchi, Journal of the Japan Society of Photographic Science, 13, 126 (1951)" and "A. Pailliofet and J. Pouradier, Bull. Soc. chim. France, 1982, I-445 (1982)."

$$\text{Note that } pK_{sp} = -\log_{10}K_{sp}.$$

The measurement values for each additive are shown in Table 7.

[Measurement of Reduction Potential Value of Additives Added to Silver Nano-disk Layer]

A reduction potential was measured by referring to the cyclic voltammetry measurement described in "Electrochemical Measurement Method" (1984, Akihiro Fujishima et al.) P150-167. The measurement values for each additive are shown in Table 7.

[Surface Reflectivity]

The surface of the antireflection film of each of the examples and the comparative examples opposite to the layer of low refractive index (the back surface of the transparent substrate) was coated with a black ink (Artline KR-20 black manufactured by Shachihata Inc.), and reflection on the back surface in the visible light range was removed. Measurement of specular reflection in a case where light was incident from the side of the layer of low refractive index at an incidence angle of 5° was performed by using a UV-visible/NIR spectrophotometer (V560, manufactured by JASCO Corporation). The reflectivity was measured at a wavelength of 450 nm to 650 nm to calculate an average value (hereinafter, will be referred to as "average reflectivity") and evaluated according to the following criteria. The results are shown in Table 7.

A: less than 0.5%
B: 0.5% or more and less than 1.0%
C: 1.0% or more and less than 2.0%
D: 2.0% or more

[Ozone Gas Resistance]

Two sets of samples in which the antireflection films of each of the examples and the comparative examples were bonded to a blue plate glass having a thickness of 3 mm via an adhesive film (PD-S1: manufactured by Panak Co., Ltd.) so that the transparent substrate was on the blue plate glass side, were prepared. An average reflectivity (before an exposure test) similar to that of the method for measuring a surface reflectivity was calculated for the antireflection films of each sample of one set of the two sets. The reflectivity was measured by applying black ink on the side opposite to the surface of the blue plate glass to which the antireflection film was adhered.
Each sample of the other set was exposed to a corrosion tester GS-FD (manufactured by Suga Test Instruments Co., Ltd.) for 120 hours under environments of 25°C and 60% ozone concentration of 10 ppm.

Measurement of the surface reflectivity was performed on the antireflection films of each sample after the exposure in the same manner as above, and the average reflectivity (after the exposure test) was calculated.

A difference between the average reflectivity obtained before the exposure test and the average reflectivity after the exposure test obtained as described above was determined and evaluated based on the following criteria. The evaluation results are shown in Table 7.

A: The difference is 0.2% or less.
B: The difference is more than 0.2% and 0.4% or less.
C: The difference is more than 0.4% and 0.6% or less.
D: The difference is more than 0.6% and 0.8% or less.
E: The difference is more than 0.8% and 1.0% or less.
F: The difference is more than 1.0% and 2.0% or less.
G: The difference is more than 2.0%.

[Pencil Hardness]

The antireflection films of each of the examples and the comparative examples were bonded to a glass plate via an adhesive film (PD-S1: manufactured by Panak Co., Ltd.) so that the transparent substrate was on the glass side, and pencil hardness was measured according to JIS K-5600-5-4. The results are shown in Table 7. The pencil hardness is represented by, in order of harder pencil, 6H, 5H, 4H, 3H, 2H, H, F, HB, B, 2B, 3B, 4B, 5B, and 6B, and measurement hardness is described in the table.

[Scratch Resistance]

Using a continuous loading scratch resistance strength tester (TYPE: 18, manufactured by Shinto Scientific Co., Ltd.), a load of 200 g/$cm^2$ was applied after mounting ASPURE WIPER (manufactured by AS ONE Corporation) and allowing pure water to permeate therethrough by the wiper, and under an environment containing water, the surface of the antireflection film of each of Examples and Comparative Examples on the layer of low refractive index side was allowed to reciprocate 5,000 times. A wear state of the surface was observed visually and under an optical microscope. The results evaluated according to the following criteria are shown in Table 7.

A: The sample is in a state in which the state after rubbing is not observed at all
B: The state after rubbing can be confirmed as a trace of rubbing
C: The state after rubbing can be confirmed as a width of greater than or equal to 1 mm

[Table 7]

| | Silver nanoparticle layer | | | | Unreacted ultraviolet polymerization initiator in layer other than transparent substrate [mg/m$^2$] | Evaluation result | | | |
|---|---|---|---|---|---|---|---|---|---|
| | Ratio of metal more noble than silver to silver [atom%] | Additive of silver nanoparticle layer | $pK_{sp}$ value of additive | Reduction potential of additive [mV] | | Reflectivity | Ozone gas resistance | Pencil hardness of hard coat layer | Scratch resistance |
| Comparative example 1 | 0 | Methylureidophenyl mercaptotetrazole | 14.5 | 550 | 0.2 | B | F | 2B | C |
| Comparative example 2 | 0.3 | Improved | Improved | Improved | 0 | C | G | 3B | C |
| Example 1 | 0.003 | Improved | Improved | Improved | 0.2 | B | D | 2B | C |
| Example 2 | 0.03 | Improved | Improved | Improved | 0.2 | B | B | 2B | C |
| Example 3 | 0.3 | Improved | Improved | Improved | 0.2 | B | B | 2B | C |
| Example 4 | 3 | Improved | Improved | Improved | 0.2 | B | B | 2B | C |
| Example 5 | 30 | Improved | Improved | Improved | 0.2 | C | B | 2B | C |
| Example 6 | 0.3 | - | - | - | 0.2 | B | E | 2B | C |
| Example 7 | 0.3 | 1-Phenyl-1H-tetrazole-5-thiol | 15.5 | 800 | 0.2 | B | D | 2B | C |
| Example 8 | 0.3 | 5-Amino-1,3,4-thiadiazole-2-thiol | 13.5 | 670 | 0.2 | B | D | 2B | C |
| Example 9 | 0.3 | N-(3-(5-mercapto-1H-tetrazol-1-yl) phenyl)-3-(methyl(pyrrolidin-1-yl) a minopropanamide) | 13.0 | 800 | 0.2 | B | E | 2B | C |
| Example 10 | 0.3 | Methylureidophenyl mercaptotetrazole | 14.5 | 550 | 100 | B | D | H | A |
| Example 11 | 0.3 | Improved | Improved | Improved | 100 | A | D | H | A |
| Example 12 | 0.3 | Improved | Improved | Improved | 25 | A | C | H | A |
| Example 13 | 0.3 | Improved | Improved | Improved | 0.2 | A | A | B | B |

(continued)

| | Silver nanoparticle layer | | | | Unreacted ultraviolet polymerization initiator in layer other than transparent substrate [mg/m²] | Evaluation result | | | |
|---|---|---|---|---|---|---|---|---|---|
| | Ratio of metal more noble than silver to silver [atom%] | Additive of silver nanoparticle layer | $pK_{sp}$ value of additive | Reduction potential of additive [mV] | | Reflectivity | Ozone gas resistance | Pencil hardness of hard coat layer | Scratch resistance |
| Example 14 | 0.3 | Improved | Improved | Improved | 0.2 | A | A | HB | A |

As shown in Table 7, it became clear that Comparative Example 1 was able to obtain good reflectivity, but the ozone gas resistance was low. In Examples 1 to 13 in which the metal more noble than silver (here, gold) was contained, the result in which the ozone gas resistance was higher than that of Comparative Example 1 was obtained.

It was found that as shown in Example 1, the ozone gas resistance could be obtained even with a small content ratio of gold, but as shown in Examples 2 to 4, the ozone gas resistance is more improved as the content ratio is large to some extent. On the other hand, in the case where the content ratio was large as in Example 4, the reflectivity increased and the antireflection performance deteriorated.

Further, based on the comparison of Example 3 and Examples 6 to 9, it was found that the ozone gas resistance was improved by allowing the silver nanoparticle layer to contain an organic component in which the solubility product $pK_{sp}$ with respect to a silver ion is 14 or greater and/or an organic component in which the reduction potential is less than 700 mV. In particular, as in Example 3, the ozone gas resistance was the best in a case of containing an organic component that satisfies the condition in which the solubility product $pK_{sp}$ with respect to a silver ion is 14 or greater and the reduction potential is less than 700 mV.

In addition, it became clear that it is necessary to provide the hard coat layer in order to improve the hardness and the scratch resistance at the same time. As shown in Examples 10 to 12, it became clear that the ozone gas resistance was lowered in the case of using the UV curable resin as the hard coat layer. On the other hand, very favorable level of the ozone gas resistance could be realized by forming the hard coat layer with the aqueous resin composition as shown in Examples 13 and 14.

Explanation of References

1, 2, 3: antireflection film
9: pressure sensitive adhesive layer
10: transparent substrate
11: first antireflection film
12: second antireflection film
20: hard coat layer
30: antireflection layer
32: layer of high refractive index
35: silver nanoparticle
35A, 35B: silver nano-disk
35C: silver nanorod
36: silver nanoparticle layer
38: layer of low refractive index
50: glass plate
100: functional glass

**Claims**

1. An antireflection film comprising:

   a transparent substrate; and
   an antireflection layer provided on one surface side of the transparent substrate,
   wherein the antireflection layer is formed by laminating, from the transparent substrate side, a silver nanoparticle layer formed by dispersing a plurality of silver nanoparticles of which an aspect ratio is greater than or equal to 3 in a binder, and a layer of low refractive index having a refractive index lower than a refractive index of the transparent substrate, in this order, and
   the silver nanoparticle layer contains a metal more noble than silver.

2. The antireflection film according to claim 1,
   wherein the silver nanoparticle has a flat plate shape, a major axis length of the silver nanoparticle is an equivalent circle diameter of a main plane, and the aspect ratio is a ratio of the equivalent circle diameter to a plate thickness.

3. The antireflection film according to claim 1 or 2,
   wherein an amount of the noble metal contained in the silver nanoparticle layer is $10^{-2}$ atom% to 5 atom% with

respect to the silver nanoparticle.

**4.** The antireflection film according to any one of claims 1 to 3,
wherein the noble metal is disposed on a surface of the silver nanoparticle.

**5.** The antireflection film according to any one of claims 1 to 4,
wherein the noble metal is at least one of gold, palladium, iridium, platinum, or osmium.

**6.** The antireflection film according to any one of claims 1 to 5,
wherein the silver nanoparticle layer contains an organic component in which a solubility product $pK_{sp}$ with respect to a silver ion is 14 or greater, or a reduction potential is less than 700 mV.

**7.** The antireflection film according to any one of claims 1 to 5,
wherein the silver nanoparticle layer contains an organic component in which a solubility product $pK_{sp}$ with respect to a silver ion is 14 or greater, and a reduction potential is less than 700 mV.

**8.** The antireflection film according to any one of claims 1 to 7, further comprising:

a hard coat layer between the transparent substrate and the silver nanoparticle layer.

**9.** The antireflection film according to claim 8,
wherein the hard coat layer has a pencil hardness of HB or more.

**10.** The antireflection film according to claim 8 or 9,
wherein the hard coat layer is formed of a cured product of an aqueous resin composition.

**11.** The antireflection film according to any one of claims 8 to 10, further comprising:

a layer of high refractive index having a refractive index higher than that of the hard coat layer, between the hard coat layer and the transparent substrate.

**12.** The antireflection film according to any one of claims 1 to 11,
wherein a total amount of an unreacted polymerization initiator contained in a layer other than the transparent substrate is 50 $mg/m^2$ or less.

**13.** A functional glass comprising:

a glass plate; and
the antireflection film according to any one of claims 1 to 12 adhered to at least one surface of the glass plate.

FIG. 1

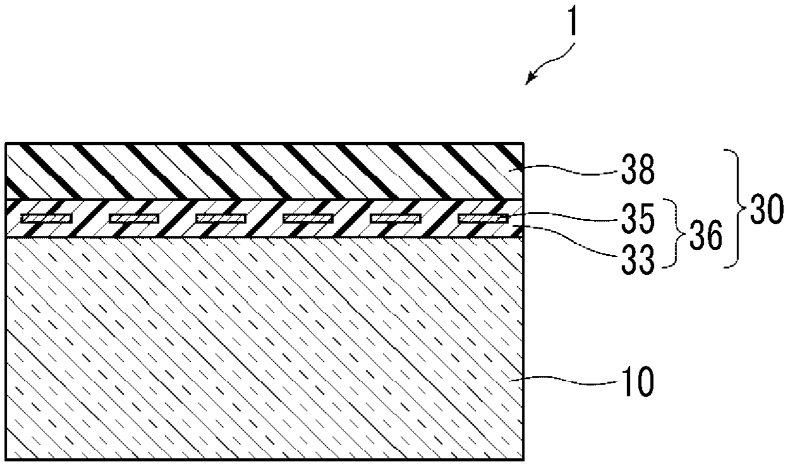


FIG. 2

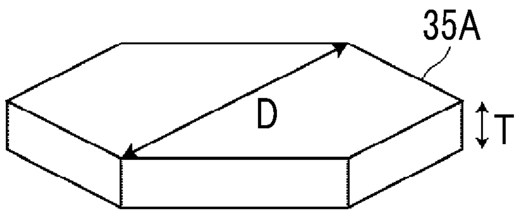


FIG. 3

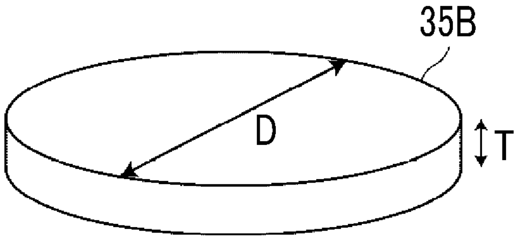


FIG. 4

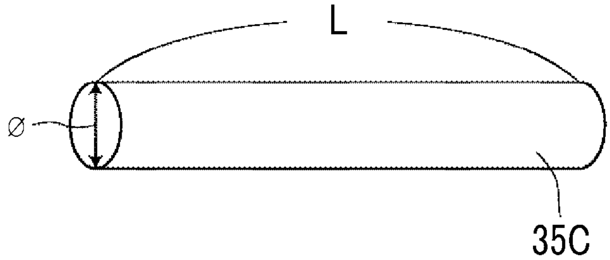

FIG. 5

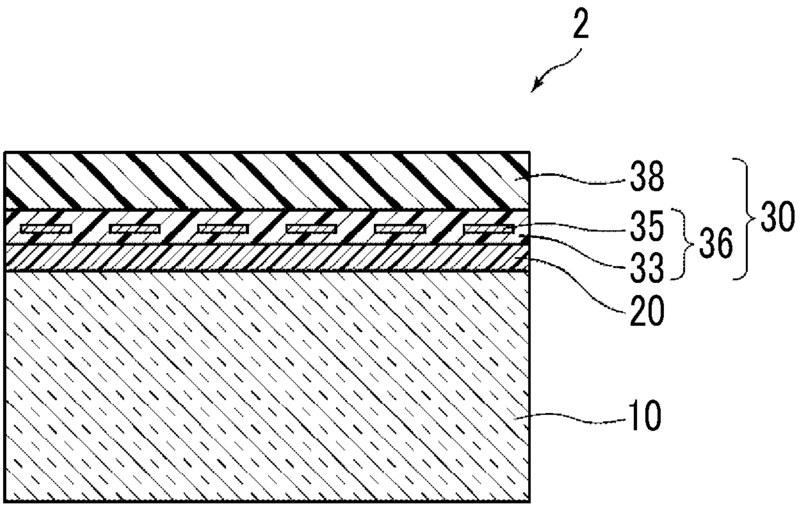


FIG. 6

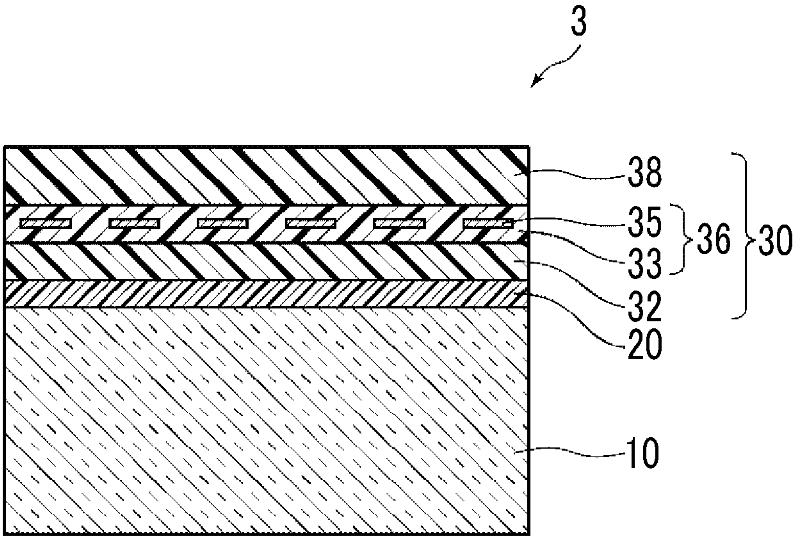

FIG. 7

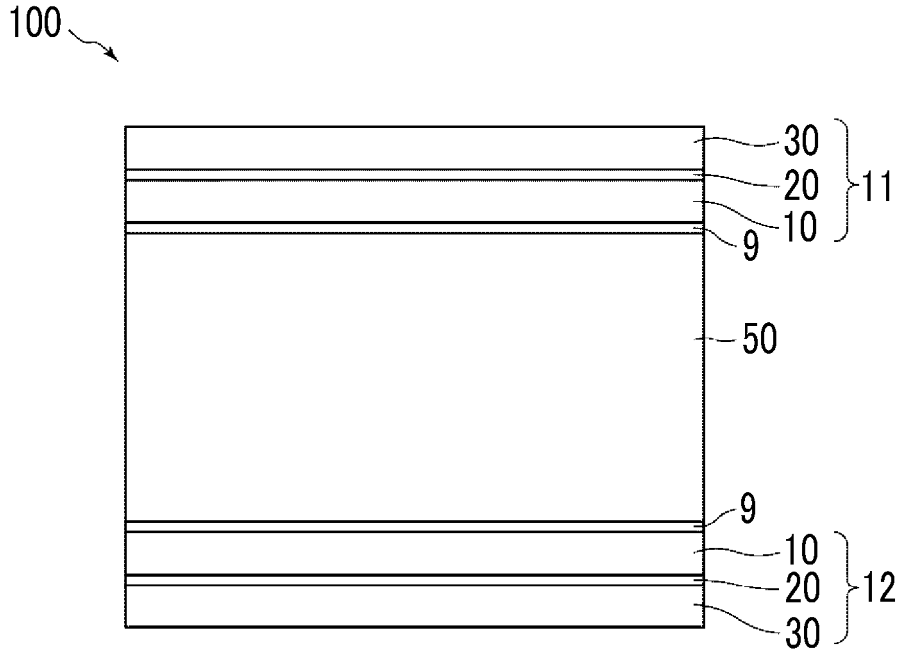

## INTERNATIONAL SEARCH REPORT

International application No.
PCT/JP2017/009998

A. CLASSIFICATION OF SUBJECT MATTER
*G02B1/111*(2015.01)i, *B32B7/02*(2006.01)i, *B32B27/20*(2006.01)i, *C03C17/32*(2006.01)i, *C03C17/34*(2006.01)i, *G02B1/14*(2015.01)i

According to International Patent Classification (IPC) or to both national classification and IPC

B. FIELDS SEARCHED

Minimum documentation searched (classification system followed by classification symbols)
G02B1/111, B32B7/02, B32B27/20, C03C17/32, C03C17/34, G02B1/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2015-129909 A (Fujifilm Corp.), 16 July 2015 (16.07.2015), paragraphs [0001], [0029] to [0119]; fig. 1 to 11 & US 2016/0291207 A1 paragraphs [0003], [0045] to [0206]; fig. 1 to 11 & WO 2015/083361 A1 & EP 3078993 A1 & CN 105793740 A | 1-13 |
| Y | JP 10-3868 A (Mitsubishi Electric Corp.), 06 January 1998 (06.01.1998), paragraphs [0001], [0026] (Family: none) | 1-13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 July 2017 (05.07.17) | 01 August 2017 (01.08.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No. PCT/JP2017/009998

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-62401 A (Fuji Photo Film Co., Ltd.), 28 February 2002 (28.02.2002), paragraphs [0028] to [0030], [0048] to [0057]; fig. 1 (Family: none) | 1-13 |
| Y | JP 2000-515264 A (Koninklijke Philips Electronics N.V.), 14 November 2000 (14.11.2000), claim 3; page 3, line 1 to page 11, the last line; fig. 1 to 7 & US 6084343 A claim 3; column 1, line 9 to column 7, line 30; fig. 1 to 7 & WO 1998/049707 A1 & EP 910864 A1 & DE 69827741 T & TW 408347 B & CN 1229520 A | 1-13 |
| Y | JP 2000-268639 A (Sumitomo Metal Mining Co., Ltd.), 29 September 2000 (29.09.2000), claim 1; paragraphs [0012] to [0016], [0070] to [0136] & US 2002/0168478 A1 claim 1; paragraphs [0014] to [0016], [0086] to [0157] & EP 1020890 A1 & DE 60038401 T & TW 539734 B & KR 10-2000-0057753 A | 1-13 |
| Y | JP 2002-338720 A (Fuji Photo Film Co., Ltd.), 27 November 2002 (27.11.2002), paragraphs [0095] to [0097], [0104], [0109] (Family: none) | 8-11 |
| Y | JP 2011-65139 A (Fujifilm Corp.), 31 March 2011 (31.03.2011), paragraphs [0062], [0078] & WO 2011/021707 A1 page 21, lines 8 to 19; page 27, lines 14 to 29 | 10 |
| Y | JP 2014-126570 A (Toray Advanced Film Co., Ltd.), 07 July 2014 (07.07.2014), paragraphs [0001], [0177] to [0181] (Family: none) | 11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015129909 A
- JP 5636208 B
- JP 2006028280 A


### Non-patent literature cited in the description


- Chemical Handbook. Fundamentals II. 581-584
- Polyurethane Handbook. NIKKAN KOGYO SHIMBUN, LTD, 1987
- **KAORI SAKAGUCHI ; SHINICHI KIKUCHI.** *Journal of the Japan Society of Photographic Science,* 1951, vol. 13, 126
- **A. PAILLIOFET ; J. POURADIER.** *Bull. Soc. chim.,* 1982, I-445
- **AKIHIRO FUJISHIMA et al.** *Electrochemical Measurement Method,* 1984, 150-167